# EUROPEAN PATENT APPLICATION

(11) **EP 0 942 501 A2**
(43) Date of publication of application: **15.09.1999**
(21) Application number: 99301177.4
(22) Date of filing: 17.02.1999
(51) Int. Cl.: H01S 3/07, G02F 1/39, H04B 10/12

(54) **Optical fiber light amplifier**

(30) Priority: 18.02.1998 JP 5127498
(71) Applicant: NEC CORPORATION, Tokyo (JP)
(72) Inventor: Watanabe, Seiji, Minato-ku, Tokyo (JP)
(74) Representative: Moir, Michael Christopher

(57) **Abstract**

An input lightwave signal enters a Wavelenght Demultiple Multiple (WDM) coupler (2) via an optical circulator (1). To the WDM coupler (2), an excited light beam emitted from an excitation LD (3) which is driven by an excitation LD driving circuit (4) is entered. The WDM coupler (2) combines the input lightwave signal with the excited light beam, and leads it to an erbium-doped fiber (EDF)(5). The EDF (5) amplifies the lightwave signal incident from the WDM coupler (2). The amplified signal is led to a total reflector (6). The signal entered into the total reflector (6) is reflected and reentered into the EDF (5) to be amplified again. Then, the signal goes out through the WDM coupler (2) and optical circulator (1).

## Description

### BACKGROUND OF THE INVENTION

The present invention relates to a light amplifier, and more particularly, to a light amplifier which is designed to amplify lightwave signals twice by passing it twice through a fiber doped with rare earth elements.

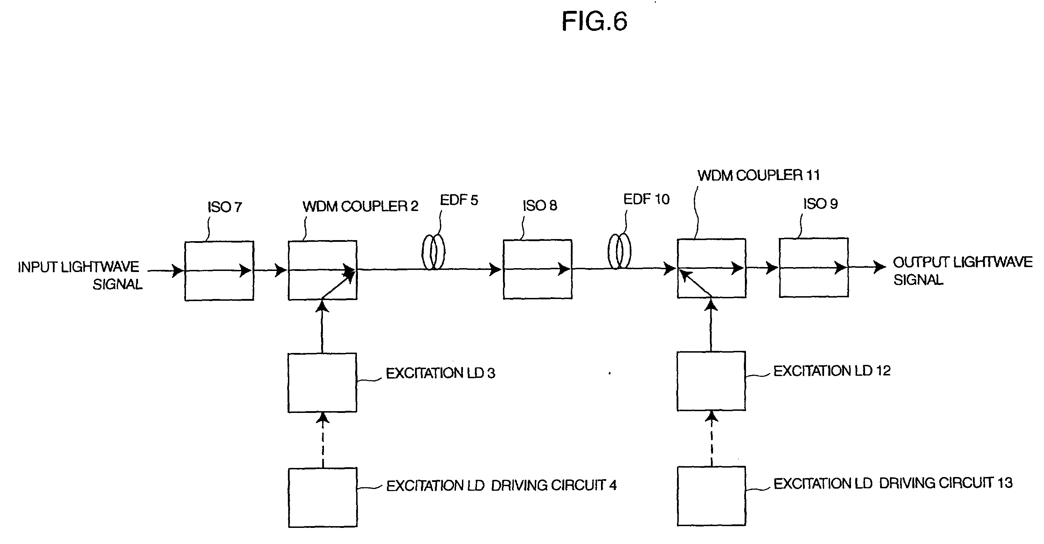

Fig. 6 shows an exemplary configuration of a conventional direct light amplifier. An optical isolator (ISO) 7 is made to lead an input lightwave signal to a WDM coupler 2. The WDM coupler (Wavelength Demultiple Multiple) 2 is a photo coupler which separates or combines a lightwave signal and an excited light beam of different wavelengths, for example, 1.55µm and 1.48µm. The EDM coupler 2 is made to combine an input lightwave signal with an excited light beam emitted from an excitation LD (Laser Diode) 3 which is driven by an excitation LD driving circuit 4 and lead it to an EDF (Erbium (Er) Doped Fiber) 5.

The EDF 5 is an optical fiber whose core is doped with a very little erbium, and is made to amplify the lightwave signal from the WDM coupler 2 and lead it to ISO 8. An EDF 10 amplifies the lighwave signal from the ISO8 and leads it to a WDM coupler 11. An excitation LD driving circuit 13 drives an excitation LD 12. The excitation LD 12 is made to generate an excited light and irradiate it to the WDM coupler 11. The WDM coupler 11 is made to lead the amplified lightwave signal emitted from the EDF 10 to the ISO 9 as well as leading the excited light beam emitted from the excitation LD 12 to the EDF 10.

Operation of the direct light amplifier is explained hereinafter. An input lightwave signal is led to the EDF 5 through the ISO 7 and WDM coupler 2. To the WDM coupler 2, an excited light beam generated by the excitation LD 3 which is driven by the excitation LD driving circuit 4 is transmitted, and it is led to the EDF 5. The lightwave signal led from the WDM coupler 2 to the EDF 5 is amplified by the EDF 5, and is led to the EDF 10 through the ISO 8. To the WDM coupler 11, an excited light beam generated by the excitation LD 12 which is driven by the excitation LD driving circuit 13 is transmitted, and it is led to the EDF 10. The lightwave signal is amplified again by the EDF 10, and is led to the WDM coupler 11. The lightwave signal passes through the WDM coupler 11 and goes out through the ISO 9.

As above described, a high gain direct light amplifier must have two stages as shown in Fig. 6, so that an input lightwave signal is amplified first by the EDF 5 and is further amplified by the EDF 10, and then it is output.

As seen above, the conventional direct light amplifier has two stages, and the construction is inevitably complicated. As a number of optical parts have to be used, the cost is increased.

### SUMMARY OF THE INVENTION

An objective of at least the preferred embodiment of the present invention is to solve these problems, and to provide a high-gain light amplifier in simple structure.

A light amplifier comprises a means for combining a lightwave signal with an excited light beam and leading it to an optical fiber, and a means for reflecting the lightwave signal amplified by the optical fiber, and the reflecting means disposed so that the lightwave signal reflected by the reflecting means reenters the optical fiber.

The optical fiber can be a fiber doped with rare earth elements.

The optical fiber can be an erbium-doped fiber.

A transmission dispersion compensating means for compensating dispersion of wavelength can be additionally provided between the optical fiber and the reflecting means.

A transmission light attenuating means for flattening the gain dependency on wavelength during amplification of a lightwave signal by the optical fiber can be additionally provided between the optical fiber and the reflecting means.

A combining means can be provided between the optical fiber and the reflecting means.

A reflection compensating means for compensating dispersion of wavelength can be additionally provided between the optical fiber and the reflecting means.

A reflection light attenuating means for flattening the gain dependency on wavelength during amplification of a lightwave signal by the optical fiber can be additionally provided between the optical fiber and the reflecting means.

In the light amplifier according to the present invention, a combining means combines a lightwave signal with an excited light beam and leads it to an optical fiber, and a reflecting means reflects the lightwave signal amplified by the optical fiber. At this time, the reflecting means is disposed so that the lightwave signal reflected by the reflecting means reenters the optical fiber.

### BRIEF DESCRIPTION OF THE DRAWINGS

Preferred features of the present invention will now described, purely by way of example only, with reference to accompanying drawings, in which:-
Fig. 1 is a block diagram showing the configuration of one embodiment of a light amplifier of the present invention;
Fig. 2 is a graph showing the relation of the level of an input lightwave signal to the gain;
Fig. 3 is a block diagram of another embodiment of a light amplifier of the present invention;
Fig. 4 is a block diagram of still another embodiment of a light amplifier of the present invention;
Fig. 5 is a block diagram of further embodiment of a light amplifier of the present invention;
Fig. 6 is a block diagram of a conventional light amplifier.

### DESCRIPTION OF THE EMBODIMENTS

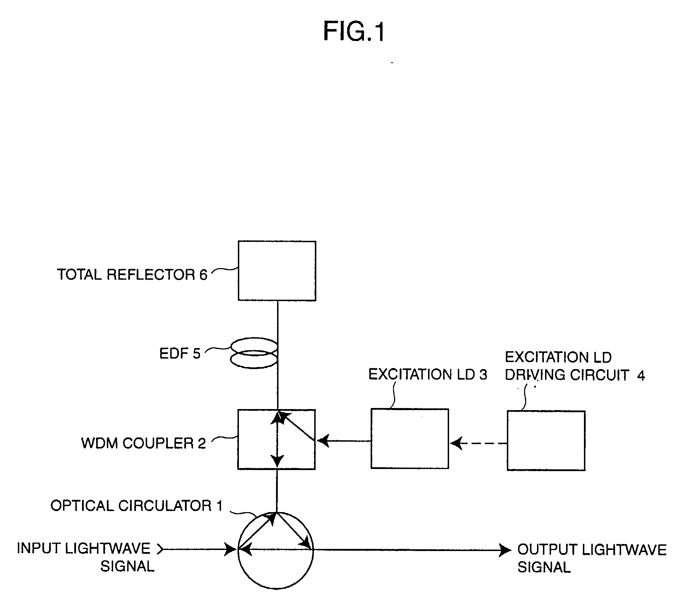

Fig. 1 is a block diagram showing the configuration of one embodiment of a light amplifier of the present invention. An optical circulator 1 leads an input lightwave signal to a WDM coupler 2. The WDM coupler 2 is made to pass the lightwave signal emitted from the optical circulator 1 and lead it to an EDF (Erbium-Doped Fiber) 5, as well as leading an excited light beam emitted from an excitation LD (Laser Diode) 3 to the EDF 5. The excitation LD 3 is made to be driven by an excitation LD driving circuit 4.

The EDF 5 is made to amplify the lightwave signal incident from the WDM coupler 2 and irradiate it to a total reflector 6. The total reflector 6 is made to reflect totally the lightwave signal emitted from the EDF 5.

Operation of a light amplifier of the present invention is explained hereinafter. An input lightwave signal is led to the erbium doped fiber (EDF) 5 through the optical circulator 1 and WDM coupler 2. To the EDF 5, an excited light beam from the excitation LD 3 which is driven by the excitation LD driving circuit 4 is transmitted via the EDM coupler 2, and an erbium atom is excited to a high energy level. When the lightwave signal is coupled with the erbium atom excited to a high energy level, the erbium atom changes to a low energy level. At this time, stimulated emission of radiation occurs, and the power of the lightwave signal is gradually increased along the optical fiber. As a result, the lightwave signal is amplified.

The amplified lightwave signal enters the total reflector 6. Then, all the lightwave signals entered the total reflector 6 are reflected, reentered into the EDF5 and amplified again, and then they are output through the WDM coupler 2 and optical circulator 1.

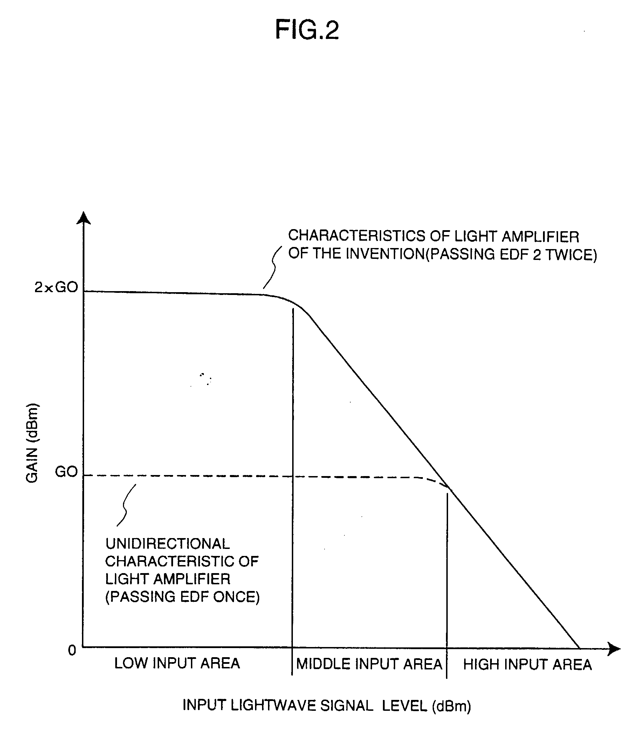

Referring to the graph of Fig. 2, operation of the EDF 5 in this embodiment is explained in details hereinafter. A solid line represents the gain to the input lightwave signal when the input signal passes the EDF 5 twice. For comparison, a broken line indicates the gain when the input signal passes the EDF 5 once.

As shown in Fig. 2, if the level of an input lightwave signal is low, the gain (GO) of the input signal after passing the EDF 5 twice is almost double the gain after passing the EDF 5 only once. If the level of an input signal is medium, the output level of the signal increases to a certain extent when it passes the EDF 5 once, and the level of the signal becomes higher when reentering the EDF 5. Thus, the input signal level attains to the saturation gain of the EDF 5, and when the signal passes the EDF 5 twice, the gain becomes smaller than the double of the gain when passing the EDG 5 once. If the level of an input is high, the input signal level attains the saturation gain of the EDF 5, and the gain after passing the EDF 5 once will become almost the same as the gain after passing it twice.

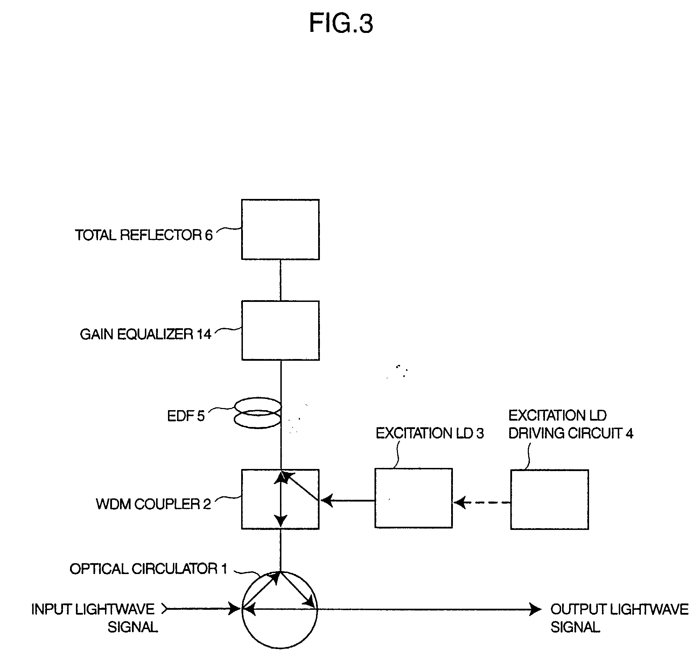

Fig. 3 is a block diagram of another embodiment of a light amplifier of the present invention. In this example of Fig. 3, a transmission gain equalizer 14 (an optical fiber grating, etc.) for flattening gain is additionally provided between the EDF 5 and the total reflector 6 in the example of Fig. 1. By adding the gain equalizer 14 which has the reverse characteristic to the dependency of gain on wavelength of a light amplifier, a light amplifier with a flattened gain can be realized, and it can be used for lightwave multiplex communication, for example.

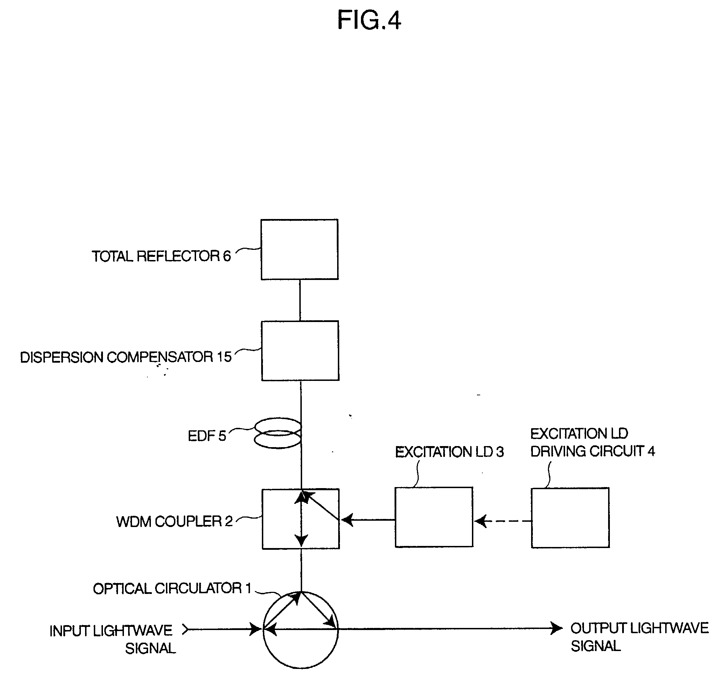

Fig. 4 is a block diagram of another embodiment of a light amplifier of the present invention. In this example of Fig. 4, a transmission dispersion compensator 15 (a dispersion compensating fiber, etc.) is additionally provided between the EDF 5 and the total reflector 6 in the example of Fig. 1. The transmission dispersion compensator 15 compensates dispersion of wavelength in a fiber to pass a lightwave signal. Accordingly it can be used as a light amplifier which compensates dispersion of wavelength in a transmission fiber.

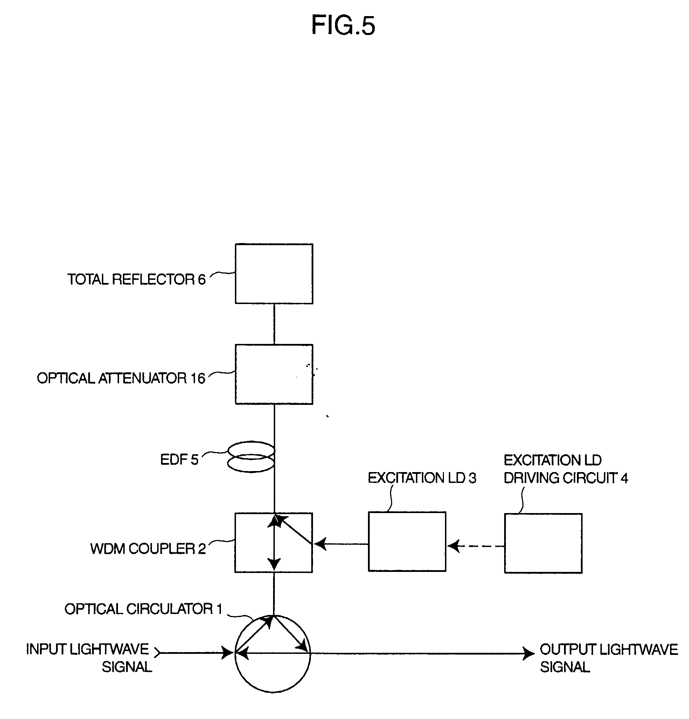

Fig. 5 is a block diagram of still another embodiment of a light amplifier of the present invention. In this example of Fig. 5, an optical attenuator 16 is additionally provided between the EDF 5 and the total reflector 6 in the example of Fig. 1. By adding the optical attenuator 16 and setting its attenuation to an appropriate level, a light amplifier whose dependency of gain on wavelength is set at a maximally flattened operating point can be realized.

As described heretofore, a light amplifier of the present invention can amplify a lightwave signal twice by passing it twice through one EDF 5. This can provide a very high gain. Further, as seen from the configuration of each embodiment, the number of optical parts can be reduced comparing with a conventional light amplifier. This can considerably reduce the cost. In addition, as described before, in a light amplifier containing optical parts such as a gain equalizer 14, a dispersion compensator 15 and an optical attenuator 16, an input lightwave signal passes twice through each of these optical parts. Thus, in such a light amplifier, the optical filter characteristic, dispersion compensation and attenuation can be equally doubled, and the amplifying effect as a light amplifier can be considerably enhanced.

The same effect can be obtained even if the WDM coupler 2 is disposed between the EDF 5 and the total reflector 6 in the example of Fig. 1.

The same effect can also be obtained from a light amplifier which is modified from the one of Fig. 3 by replacing the transmission gain equalizer 14 by a reflection gain equalizer (a multi-layer film filter) and the total reflector 6 by an optical terminator.

The same effect can also be obtained from a light amplifier which is modified from the one of Fig. 4, wherein the transmission dispersion compensator 15 is replaced by a reflection dispersion compensator (an optical fiber grating) and the total reflector 6 is replaced by an optical terminator.

Further, in each of the embodiments described above, the optical circulator 1 is used to take out a lightwave signal, but an optical branch circuit can be used instead of the optical circulator 1.

In a light amplifier of the present invention, a wave combining means combines an input lightwave signal with an excited light beam and leads it to an optical fiber, and a reflecting means reflects the lightwave signal amplified by the optical fiber. The reflecting means is disposed so that the lightwave signal reflected by the reflecting means reenters the optical fiber, and the lightwave signal can be amplified twice by one optical fiber. Accordingly, a high-gain light amplifier can be realized in a simple structure, and the cost of the unit can be reduced.

While the present invention has been described in its preferred embodiments, it is to be understood that the words which have been used are words of description rather than limitation and that changes may be made to the invention without departing from its scope as defined by the appended claims.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The text of the abstract filed herewith is repeated here as part of the specification.

An input lightwave signal enters an EDM coupler via an optical circulator. To the EDM coupler, an excited light beam emitted from an excitation LD which is driven by an excitation LD driving circuit is entered. The WDM coupler combines the input lightwave signal with the excited light beam, and leads it to an erbium-doped fiber (EDF). The EDF amplifies the lightwave signal incident from the WDM coupler. The amplified signal is led to a total reflector. The signal entered into the total reflector is reflected and reentered into the EDF to be amplified again. Then, the signal goes out through the WDM coupler and optical circulator.

## Claims

1. A light amplifier which amplifies a lightwave signal by passing a lightwave signal and an excited light beam through an optical fiber, comprising:
a combining means for combining said lightwave signal with said excited light beam and leading it to said optical fibre and
a reflecting means for reflecting said lightwave signal amplified by said optical fiber,
wherein said reflecting means is disposed so that said lightwave signal reflected by said reflecting means reenters said optical fiber.

2. The light amplifier of Claim 1, wherein said optical fiber is a rare earth-doped fiber, preferably an erbium-doped fiber.

3. The light amplifier of any preceding claim, further comprising,between said optical fiber and said reflecting means, a transmission gain equalizer and/or a transmission light attenuating means and/or a reflection light attenuating means, for at least partially compensating for dependency of gain on wavelength during amplification of said lightwave signal by said optical fiber.

4. The light amplifier of any preceding claim, further comprising a transmission compensating means for compensating dispersion of wavelength,
wherein said transmission compensating means is provided between said optical fibre and said reflecting means.

5. The light amplifier of any preceding claim, wherein said optical fiber is provided between said combining means and said reflecting means.

6. The light amplifier of Claim 1, further comprising a reflection dispersion compensating means for compensating dispersion of wavelength,
wherein said reflection dispersion compensating means is provided between said optical fiber and said reflecting means.

7. A method of amplifying a lightwave signal, comprising:
combining said lightwave signal with an excited light beam and leading it to an optical fiber for amplification therein; and
reflecting said lightwave signal amplified by said optical fiber, such that said reflected lightwave signal re-enters said optical fiber.

8. The method of Claim 7, wherein said optical fiber is a rare earth-doped fiber, preferably an erbium-doped fiber.

9. The method of Claim 7 or Claim 8, wherein the method further comprises at least partially compensating for dependency of gain on wavelength during amplification of said lightwave signal by said optical fiber.

10. The method according to any of Claims 7 to 9, further comprising compensating dispersion of wavelength.
